# EUROPÄISCHE PATENTSCHRIFT

(11) **EP 3 414 879 B1**
(45) Veröffentlichungstag und Bekanntmachung des Hinweises auf die Patenterteilung: **24.06.2020**
(21) Anmeldenummer: 17704430.2
(22) Anmeldetag: 07.02.2017
(51) Int. Cl.: H04L 29/06

(54) **EINSATZ EINES NICHT LOKALEN KRYPTOGRAPHIE-VERFAHRENS NACH AUTHENTIFIZIERUNG**
USING A NON-LOCAL CRYPTOGRAPHY METHOD AFTER AUTHENTICATION
UTILISATION D'UN PROCÉDÉ CRYPTOGRAPHIQUE NON-LOCAL APRÈS L'AUTHENTIFCATION

(30) Priorität: 09.02.2016 EP 16154824
(43) Veröffentlichungstag der Anmeldung: 19.12.2018
(73) Patentinhaber: Secunet Security Networks AG, 45138 Essen (DE)
(72) Erfinder: BOECKELER, Gregor, 45138 Essen (DE); CÖLLE, Niels, 45138 Essen (DE); MAIER, Thomas, 45138 Essen (DE); STOLL, Michael, 45138 Essen (DE); SCHÄFFNER, Johannes, 45138 Essen (DE); WEHR, Stephan, 45138 Essen (DE)
(74) Vertreter: Harrison, Robert John
(86) Internationale Anmeldenummer: PCT/EP2017/052590
(87) Internationale Veröffentlichungsnummer: WO 2017/137370

(56) Entgegenhaltungen:
- WO-A1-2009/046400
- US-A1- 2015 289 135
- PASCAL URIEN ET AL: "A new cooperative architecture for sharing services managed by secure elements controlled by android phones with IP objects", COLLABORATION TECHNOLOGIES AND SYSTEMS (CTS), 2012 INTERNATIONAL CONFERENCE ON, IEEE, 21. Mai 2012 (2012-05-21), Seiten 404-409, XP032216244, DOI: 10.1109/CTS.2012.6261084 ISBN: 978-1-4673-1381-0
- AISSAOUI-MEHREZ HASSANE ET AL: "Framework implementation based on grid of smartcards to authenticate users and virtual machines", 2014 11TH INTERNATIONAL CONFERENCE ON SECURITY AND CRYPTOGRAPHY (SECRYPT), SCITEPRESS, 28. August 2014 (2014-08-28), Seiten 1-6, XP032923505,

## Beschreibung

Die Erfindung betrifft ein Verfahren zur Kommunikation von Komponenten, um den Einsatz von Kryptographie- und Authentifizierungs-Verfahren einzuleiten und diese Verfahren durchzuführen.

### Stand der Technik

Der Zugriff auf Kryptographie- oder andere zu Authentifizierungszwecken genutzte Komponenten (z.B. Chipkarten, USB-Token oder Hardware zum Erfassen von biometrischen Identifikationsmerkmalen wie Fingerabdrücken oder Irisscans), aus einem aus sicherheitstechnischen Gründen beschränkten Kontext, wie beispielsweise dem eines Browsers (z.B. im Rahmen der Nutzung von Webservices oder Webdienstleistungen), wird bisher über applikations-spezifische Schnittstellen (z.B. Browser-Plug-ins) oder über sogenannte NPAPI-Schnittstellen (z.B. Java, PKCS#11,..) realisiert. Diese Schnittstellen werden in modernen Browsern aufgrund von Sicherheitsbedenken immer weiter abgeschaltet und stehen demzufolge künftig nicht mehr zur Verfügung. Zudem müssen Plug-ins, welche diese oder vergleichbare API-Schnittstellen implementieren, plattform- und anwendungs-spezifisch implementiert und zur Verfügung gestellt werden, was einen hohen Wartungsaufwand zur Folge hat.

Ein weiterer aktueller Ansatz ist der Einsatz eines lokalen Webservers, welcher als Dienst im Hintergrund mitläuft und über die Localhost- oder Loopback-Adresse des Rechners angesprochen werden kann. Nachteile dieses Ansatzes sind ein erhöhter Ressourcen-Verbrauch, da der Dienst fortlaufend im Hintergrund mitlaufen muss, sowie weitere sicherheitsrelevante Angriffspunkte, die ein ständig im Hintergrund laufender Dienst mit sich bringt. Darüber hinaus eignet sich der Einsatz eines lokalen Webservers nur bedingt für die Verwendung in virtualisierten Umgebungen sowie im Umfeld von Remote-Desktop und Terminal-Server-Diensten. Ein Beispiel ist aus der Veröffentlichung von Pascal Urien et al "A new cooperative architecture for sharing services managed by secure elements controlled by android phones with IP objects", 2012 IEEE International Conference on Collaboration Technologies and Systems, 21 May 2012, Pages 404 - 409 DOI: 10.1109/CTS.2012.6261084 bekannt.

Aus dem Stand der Technik sind verschiedene Patentanmeldungen bzw. Patente bekannt, welche Kryptographie- und Authentifizierungsverfahren beschreiben. Dieser bekannte Stand der Technik offenbart neue Protokolle oder Abwandlungen von bekannten Protokollen sowie spezielle kryptografische Verfahren, welche eine spezifische Umgebung voraussetzen.

Zum Beispiel offenbart die deutsche Patentanmeldung DE 102 23 551 (Siemens AG) ein Datenkommunikationssystem mit verschiedenen Klienten, die auf ein Computer-Programm zugreifen können. Bei dem offenbarten Datenkommunikationssystem wird ein Klient für den Zugriff auf die Daten lediglich für einen bestimmten Zeitraum authentifiziert. Nach Ablauf dieses Zeitraums muss der Klient wieder authentifiziert werden.

Aus der europäischen Patentanmeldung Nr. EP 2 296 337 A1 (Gemalto) ist ein Verfahren zum Schutz des Zugreifens von Daten offenbart. Die Daten sind nur über einen einmaligen ("one-time") Uniform Ressource Locator (URL) erreichbar. Dieser einmalige URL wird durch eine Adresse und einem geteilten Geheimwert erzeugt.

US Patent Nr. US 6,446,204 B1 (Argo) offenbart ein Verfahren und ein System zur Realisierung eines Authentifizierungsvorgangs in einem Webserver. In diesem Patent wird das Authentifizierungsverfahren über mehrere, voneinander unabhängigen Servern durchgeführt.

US Patentnummer US 7,320,024 B2 offenbart ein System zum Verfügungsstellen von Inhalten von einem Webserver, welcher einen Authentifizierungsserver aufweist. Der Webserver stellt den Inhalt einem Nutzer nach Eingabe einer Nutzererkennung (Identifikator) zur Verfügung.

Aus dem US Patent Nr. US 8,769,651 B2 (SecureAuth) ist ein System für eine mobile Vorrichtung bekannt, welche ein Token abspeichert, das nach Durchführung eines Authentifizierungsverfahrens auf der mobilen Vorrichtung abgespeichert wird.

Die internationale Patentanmeldung WO 2010/132458 A2 (Microsoft) offenbart eine sogenannte Challenge zur Authentifizierung von Zugriffsrechten.

Ein Ansatz für die Authentifizierung von Zugriffsrechten ist auch aus der Veröffentlichung "Framework implementation based on grid of smartcards to authenticate users and virtual machines", 2014 11th International Conference on Security and Cryptography, Scitepress, 28 August, 2014, Seiten 1-6, bekannt.

### Kurzfassung der Erfindung

Ein Verfahren zur Kommunikation von Komponenten, um den Einsatz von Kryptographie- und Authentifizierungs-Verfahren (z.B. zur Erstellung einer Signatur, zum Verschlüsseln/Entschlüsseln von Daten oder zur Authentisierung einer Person) einzuleiten und diese Verfahren durchzuführen wird beschrieben. Das Verfahren umfasst die folgenden Schritte:

Registrierung eines URI-Schemas bei Aktivieren oder Starten einer lokalen Einheit oder bei der Installation der Kommunikations-Komponente, Erzeugen eines URIs (Uniform Resource Identifier), Aufrufen einer Kommunikations-Komponente mittels des erzeugten URIs und des registrierten URI-Schemas; Durchführung des Krypotgraphie- und Authentifizierungs-Verfahren durch die Kommunikations-Komponente; und Erzeugung mindestens eines Ergebnisses durch die Kommunikations-Komponente.

Das URI-Schema für das Aufrufen der Kommunikations-Komponente wird vorher in dem System registriert.

Zur Durchführung des Kryptographie- und Authentifizierungs-Verfahrens kann die Kommunikations-Komponente auf eine Sicherheitsvorrichtung zugreifen. Die Sicherheitsvorrichtung ist z.B. ein Bluetooth-Gerät, eine Chipkarte, ein USB-Stick, ein Datenträger oder ein Gerät zum Erfassen von biometrischen Merkmalen.

In einem weiteren Aspekt umfasst das Verfahren die Abfrage eines Identifikators durch die Kommunikations-Komponente vor Durchführung des Kryptographie- und/oder Authentifizierungs-Verfahrens. Der Identifikator ist z.B. ein Passwort, ein PIN-Code, o.dgl. und kann auch Voraussetzung für den Zugriff auf die Sicherheitsvorrichtung sein.

Der URI kann auch auf einem externen Rechner erzeugt und von dem externen Rechner an die lokale Anwendung übermittelt werden.

Das erzeugte Ergebnis kann an die lokale Anwendung zurück gegeben, und von der lokalen Anwendung an einen externen Rechner weiter geleitet werden, oder direkt von der Kommunikations-Komponente an einen externen Rechner übermittelt werden.

Das erzeugte Ergebnis kann auch durch eine Verwaltungs-Applikation verarbeitet werden, wodurch die externe Applikation den Gesamtvorgang (z.B. Authentifizierungs eines Nutzers) nur einleiten und die Rückmeldung von der Verwaltungs-Applikation auswerten muss. Die restlichen Schritte und Details des Gesamtvorgangs sind damit für die externe Applikation transparent.

Das von der Kommunikations-Komponente erzeugte Ergebnis ist zum Beispiel eine Signatur über Daten, oder das Ergebnis sind verschlüsselte bzw. entschlüsselte Daten.

Beschrieben ist auch eine lokale Einheit, welche einen Prozessor mit einer lokalen Anwendung und einer lokalen Kommunikations-Komponente, welche ein URI-Schema bei Aktivieren oder Starten einer lokalen Einheit oder bei der Installation der Kommunikations-Komponente registriert, umfasst. Die lokale Einheit hat auch eine Netzwerk-Schnittstelle zur Verbindung der lokalen Einheit mit einem externen Rechner, wobei die Netzwerk-Schnittstelle Befehle zum Starten einer externen Applikation überträgt und Parameter von der externen Applikation empfängt.

Die lokale Anwendung kann mittels eines erzeugten URIs die Kommunikations-Komponenten über das selbst registrierte (eigene) URI-Schema aufrufen. Die Kommunikations-Komponente kann Kontakt mit einer Sicherheitsvorrichtung herstellen und ein Ergebnis an den externen Rechner übermitteln.

Durch die Verwendung dieses Verfahrens werden Risiken gemindert und potentielle Angriffspunkte vermieden, da keine browserspezifischen Erweiterungen oder lokale Serveranwendungen (mit Zugriff über Loopback- oder Netzwerk-Adapter) installiert und/oder verwendet werden müssen. Darüber hinaus ist das Verfahren zukunftssicherer, da Voraussetzungen für bisher genutzte Verfahren (wie Plug-in-Schnittstellen) von den jeweiligen Implementierungen und Updatezyklen (z.B. Browser) abhängig sind, was bei dem hierin beschriebenen Verfahren nicht der Fall ist.

### Figuren

Weitere Eigenschaften und Vorteile der Erfindung ergeben sich aus der folgenden, rein beispielhaften und in keiner Weise beschränkenden Beschreibung bevorzugter Ausführungsformen der Erfindung unter Bezugnahme auf die beigefügten Zeichnungen. Es zeigen:
Fig. 1a schematisch ein System mit Zugriff auf eine externe Sicherheitsvorrichtung;
Fig. 1b schematisch ein System mit Zugriff auf einer Sicherheitsvorrichtung, welche selber Bestandteil der lokalen Einheit ist;
Fig. 2 schematisch ein System mit Zugriff auf eine Sicherheitsvorrichtung mit direkter Weiterleitung des Ergebnisses an den externen Rechner;
Fig. 3a schematisch ein System mit Zugriff auf eine Sicherheitsvorrichtung mit Verarbeitung von zu signierenden Daten;
Fig. 3b schematisch ein System mit Zugriff auf eine Sicherheitsvorrichtung mit Verarbeitung von zu verschlüsselnden Daten;
Fig. 4 schematisch ein System mit Erzeugung einer URI auf einem externen Rechner sowie Übertragung der URI an die lokale Anwendung;
Fig. 5 schematisch ein System mit Weiterverarbeitung auf einem externen Rechner; und
Fig. 6 den Ablauf des Verfahren.

### Detaillierte Beschreibung der Erfindung

Es wird für einen Fachmann auf dem Gebiet der Kryptographie- und Authentifizierungs-Verfahren ersichtlich, dass die folgende Beschreibung der Ausführungsformen und der Aspekte der Erfindung lediglich zu Illustration bereitgestellt sind, und nicht für den Zweck die Erfindung, welche durch die beigefügten Ansprüche und deren Äquivalente definiert wird, einzuschränken.

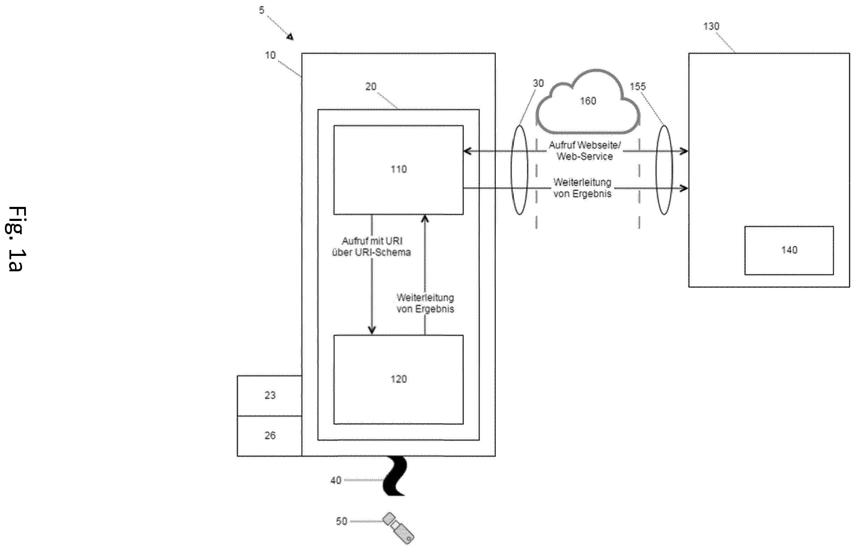

Zunächst wird Bezug auf Figur 1a genommen. Darin wird schematisch ein System 5 für den Zugriff auf eine externe Applikation 140 auf einen externen Rechner 130 dargestellt. Das System 5 umfasst eine lokale Einheit 10 mit einem Prozessor 20, evtl. einer Grafikkarte 23 und einem Speicherplatz 26. Auf dem Prozessor 20 laufen Programme zur Erzeugung einer lokalen Anwendung 110 und einer Kommunikations-Komponente 120. Die lokale Anwendung 110 ist z.B. ein Browser. Die lokale Einheit 10 ist zum Beispiel ein PC, ein Tablet oder ein Smartphone.

Die lokale Einheit 10 hat auch eine Netzwerkschnittstelle 30 und eine Sicherheits-Schnittstelle 40. Die Netzwerkschnittstelle 30 ist über ein Netzwerk 160 mit dem Internet oder einem Intranet bzw. Extranet mit dem externen Rechner 130 z. B. einen Webserver verbunden.

Die Sicherheits-Schnittstelle 40 ist mit einer Sicherheitsvorrichtung 50, z.B. einem USB-Stick, einem Chipkarte-Lesegerät oder mit einem Datenträger physikalisch verbunden. Ebenfalls kann die Sicherheits-Schnittstelle 40 eine Funkschnittstelle sein, die beispielsweise über NFC (Near Field Communication = Nahfeldkommunikation) oder Bluetooth mit einer Sicherheitsvorrichtung 50 in Kontakt treten kann. Die Sicherheitsvorrichtung 50 kann auch ein Gerät zur Erfassung von biometrischen Identifikationsmerkmalen wie Fingerabdrücke oder Irisscans sein. Darüber hinaus können mehrere Sicherheits-Schnittstellen 40 und/oder Sicherheitsvorrichtungen 50 vorhanden sein. Der Zugriff auf die Sicherheitsvorrichtung 50 kann von der Abfrage durch die Kommunikations-Komponente 120 und korrekten Eingabe eines Identifikators abhängig sein.

Der externe Rechner 130 ist ebenfalls über eine Server-Schnittstelle 155 mit dem Internet 160 oder mit einem Extranet bzw. Intranet verbunden. In dem dargestellten Beispiel hat der externe Rechner 130 eine externe Applikation 140, auch Applikationsprogramm genannt, die auf dem externen Rechner 130 läuft.

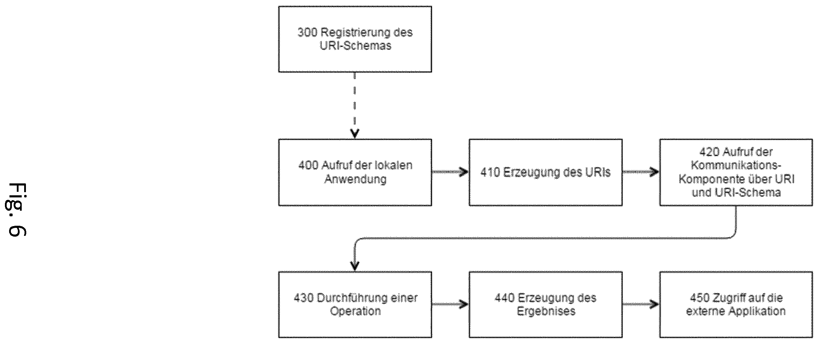

Der Ablauf des Verfahrens wird nun anhand der Figur 6 beschrieben.

In einem ersten Registrierungs-Schritt 300 wird ein eigenes URI-Schema registriert. Dieser erste Schritt kann während der Installation der Kommunikations-Komponente 120 sowohl einmalig als auch mehrfach, z.B. bei jeder Aktualisierung erfolgen. Dieser Registrierungs-Schritt 300 kann ebenso bei jedem Aktivieren oder Starten der lokalen Einheit 10 durchgeführt werden.

In einem folgenden Schritt 400 wird die lokale Anwendung 110 auf der lokalen Einheit 10 aufgerufen. Dieser folgende Schritt 400 ist dem Registrierungs-Schritt 300 zeitlich nachgelagert und kontextunabhängig. Die lokale Anwendung 110 will auf eine Applikation 140 auf dem externen Rechner 130 zugreifen. Dieser Zugriff wird aber nur nach erfolgreicher Authentifizierung gewährt. Um diese Authentifizierung durchzuführen wird in dem nächsten Schritt 410 ein URI (Uniform Resource Identifier) erzeugt.

Ein nicht limitierendes Beispiel des Zugriffs ist das Aufrufen einer Webseite auf dem externen Rechner 130. In diesem Fall wird der Nutzer eine IP Adresse oder eine URL in einer Browserzeile in einem Browser (der lokalen Anwendung 110) eingeben. Diese Eingabe in der Browserzeile zeigt auf die Applikation 140 auf dem externen Server 130 hin. Da die Applikation 140 eine Authentifizierung vor dem Zugriff benötigt, übermittelt sie dafür nötige Parameter an den Browser (die lokale Anwendung 110). Die lokale Anwendung 110 erzeugt einen URI basierenden auf den übermittelten Parametern. Alternativ kann der URI auch auf dem externen Rechner erzeugt und mit oder anstelle der Parameter an die lokale Anwendung 110 übermittelt werden.

Ein URI (Englisch: Uniform Resource Identifier) ist ein Identifikator, welche eine Ressource auf einem lokalen Rechner oder auf einem externen Rechner bezeichnet und ist im RFC 3986 des W3C-Konsortiums spezifiziert. Der URI besteht gemäß RFC 3986 aus einer Zeichenfolge mit einem Schema, einem Anbieter (Authority), einem Pfad (Path), einer Abfrage (Query) und einem Fragment, wobei letztere vier zusammengenommen, im nachfolgenden als die eigentlichen Nutzdaten eines URls bezeichnet werden. Ein Beispiel der erzeugten URI ist wie folgt: *secunet:*//*auth?Protocol=secunet& TokenType=USBStick&Challenge=A7893985*

Mittels des im Schritt 300 eigenen registrierten URI-Schemas und des zuvor im Schritt 410 erzeugten URls wird im Schritt 420 die Kommunikations-Komponente 120 aufgerufen. Die Kommunikations-Komponente 120 übernimmt die Nutzdaten aus dem erzeugten URI und führt im Schritt 430 eine Operation durch. Diese Operation ist ein Kryptographie- oder ein Authentifizierungs-Verfahren und beinhaltet in der Regel den Zugriff auf die Sicherheitsvorrichtung 50. Sind mehrere Sicherheitsvorrichtungen 50 vorhanden, so wird der Anwender zur Auswahl der zu verwendenden Sicherheitsvorrichtung 50 gebeten.

Im Schritt 440 wird durch die Kommunikations-Komponente 120 mindestens ein Ergebnis erzeugt und anschließend an die lokale Anwendung 110 übermittelt. Die lokale Anwendung 10 sendet das Ergebnis an die externe Applikation 140 weiter. Sofern das Ergebnis korrekt ist, erhält die lokale Anwendung 110 im Schritt 450 anschließend den Zugriff auf die Applikation 140.

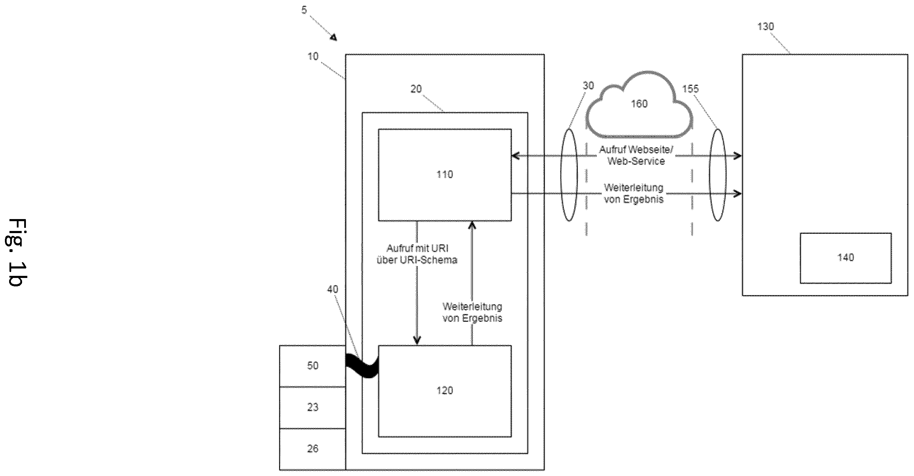

Fig. 1b zeigt einen weiteren Aspekt des Verfahrens. Die einzelnen Elemente in Fig. 1b sind weitgehend identisch mit den Elementen aus Fig. 1a und haben somit die gleichen Bezugszeichen. In diesem Aspekt ist die Sicherheitsvorrichtung 50 fester Bestandteil der lokalen Einheit 10 wie beispielsweise ein Secure-Element-Chip oder eine Hardware-basierte Verschlüsselung. Die Sicherheitsvorrichtung 50 kann auch in Software implementiert sein.

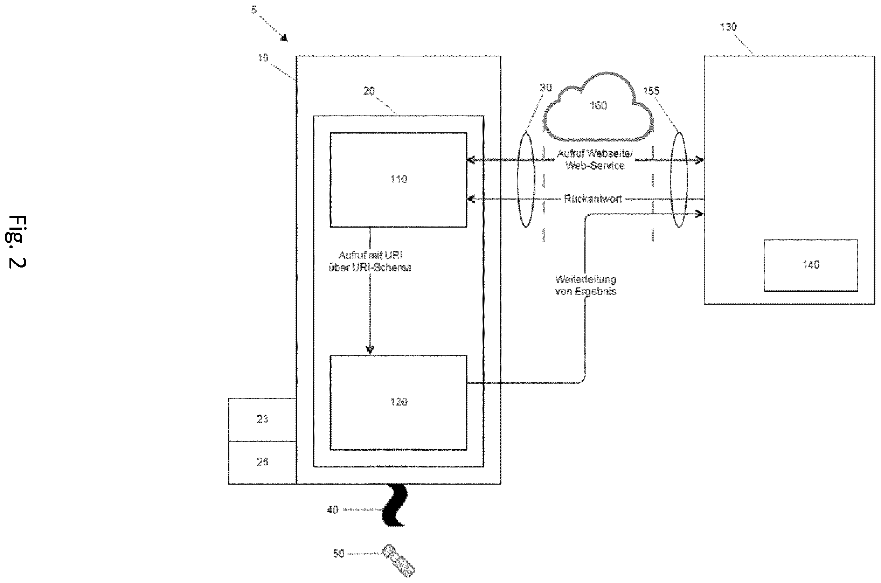

Fig. 2 zeigt einen dritten Aspekt des Verfahrens. In diesem dritten Aspekt des Verfahrens liefert die Kommunikations-Komponente 120 auf der lokalen Einheit 10 das Ergebnis direkt an den externen Rechner 130 zurück. Nach Validierung des Ergebnisses durch den externen Rechner 130 sendet der externe Rechner 130 eine Rückantwort an die lokale Anwendung 110. Die Rückantwort kann in der lokalen Anwendung 110 angezeigt werden.

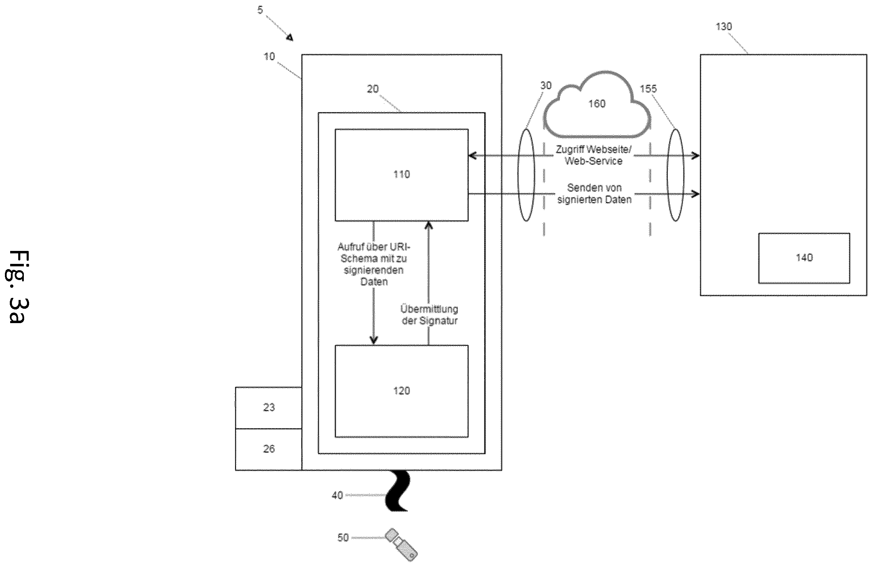

Fig. 3a zeigt einen weiteren Aspekt des Verfahrens, bei dem die lokale Anwendung 110 über das eigene URI-Schema Daten übermittelt, welche zu signieren sind. Die Übermittlung der Daten kann dabei direkt, d.h. das eigene URI-Schema enthält die Daten selber, oder indirekt wie beispielweise durch einen Verweis auf eine Datei, welche diese Daten enthält, erfolgen.

Die Kommunikations-Komponente 120 bietet dem Anwender daraufhin eine Auswahl der verfügbaren Sicherheitsvorrichtungen 50, welche die Operation zur Erstellung einer Signatur unterstützen. Der Anwender wählt daraufhin die zu verwendende Sicherheitsvorrichtung 50 aus, und die Kommunikations-Komponente 120 nutzt die ausgewählte Sicherheitsvorrichtung 50, um die Signatur von den zu signierenden Daten zu erstellten. Das von der Kommunikations-Komponente 120 erzeugte Ergebnis, welches die Signatur von den zu signierenden Daten enthält, wird anschließend an die lokale Anwendung 110 übermittelt. Die lokale Anwendung 110 kann die signierten Daten, d.h. Signatur und Daten oder nur Signatur, an den externen Rechner 130 und damit an die externe Applikation 140 weitersenden.

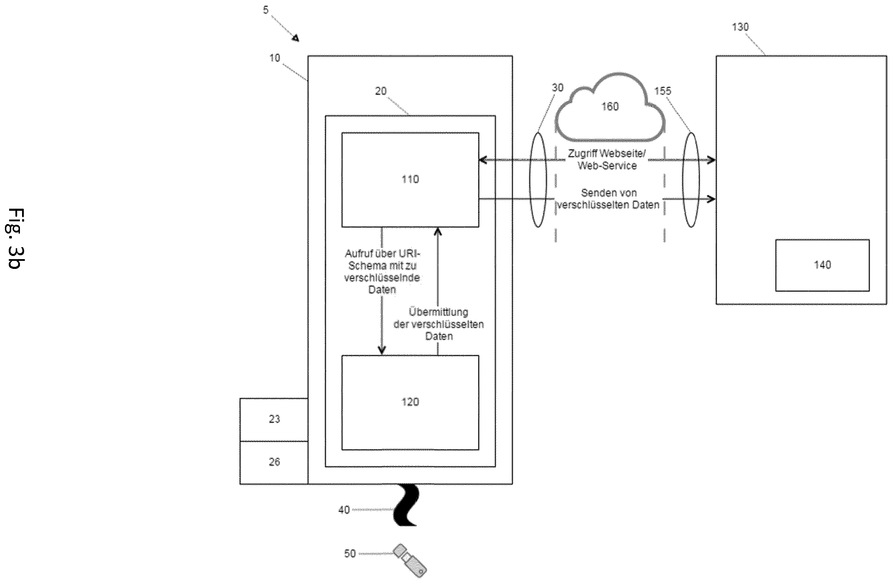

Fig. 3b zeigt ein ähnliches Verfahren wie in Fig. 3a beschrieben. Die Daten sind in diesem Fall zu verschlüsseln oder zu entschlüsseln. Die Kommunikations-Komponente 120 greif in diesem Aspekt auf die Sicherheitsvorrichtung 50 zu, um das Verschlüsselungs- bzw. Entschlüsselungs-Verfahren durchzuführen.

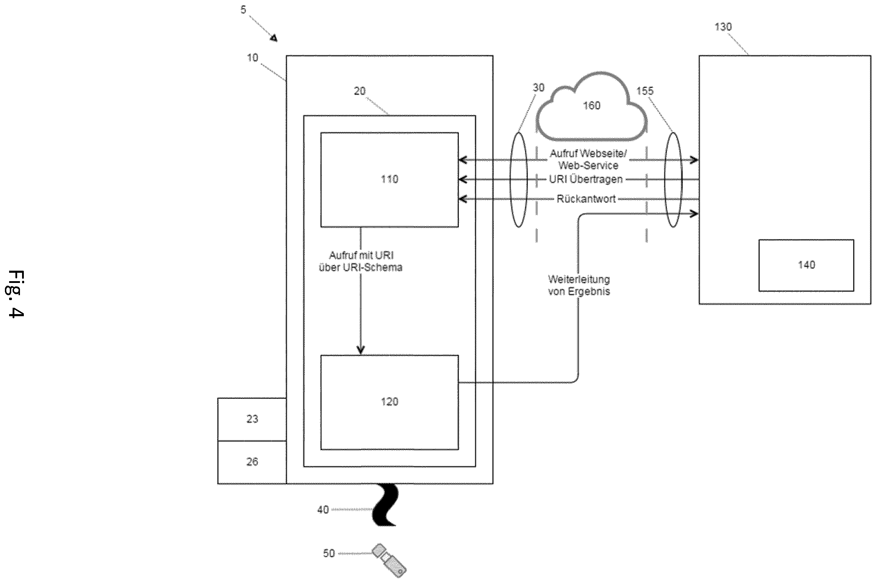

Fig. 4 zeigt ein ähnliches Verhalten wie in Fig. 2 beschrieben. In diesem Aspekt wird gezeigt, dass der URI nicht zwangsläufig von der lokalen Anwendung 110 selber erzeugt werden muss, sondern auch auf dem externen Rechner 130, beispielsweise durch die externe Applikation 140, erzeugt und anschließend an die lokale Anwendung 110 übertragen werden kann.

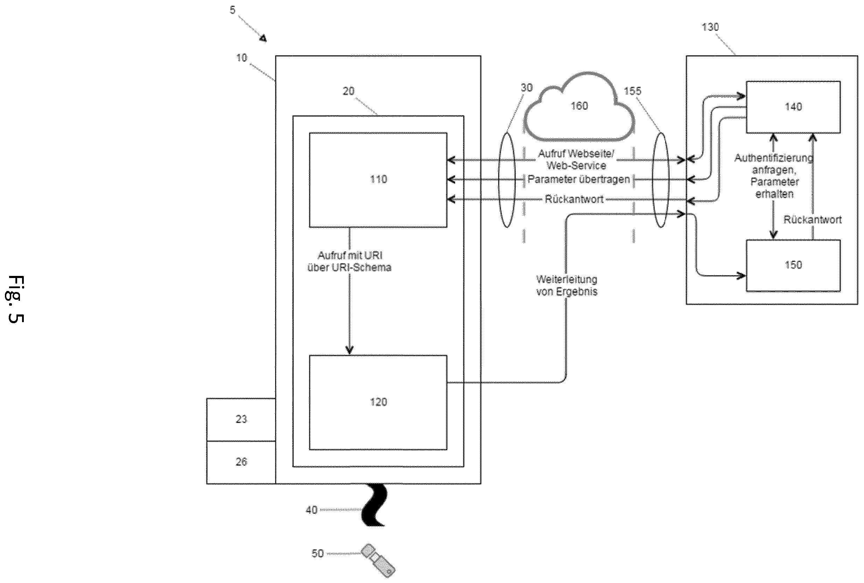

Fig. 5 zeigt einen weiteren Aspekt des Verfahrens. Diese Figur verwendet die gleichen Bezugszeichen wie in den anderen Figuren für die gleichen Elemente, geht jedoch detaillierter auf eine mögliche Verarbeitung auf dem externen Rechner 130 ein.

Auf dem externen Rechner 130 läuft nicht nur die externe Applikation 140, sondern auch eine Verwaltungs-Applikation 150. Die Verwaltungs-Applikation 150 ist über eine Server-Schnittstelle 155 mit dem Netzwerk 160 verbunden. Die externe Applikation 140 nutzt dabei die Verwaltungs-Applikation 150 um die Authentifizierung durchzuführen.

Die externe Applikation 140 fragt eine Authentifizierung bei der Verwaltungs-Applikation 150 an und erhält die dazu nötigen Parameter (wie z.B. einen erzeugten URI, eine Login-Seite oder auch eine Weiterleitung auf eine Login-Seite) von dieser Verwaltungs-Applikation 150. Die Parameter werden anschließend an die lokale Applikation 110 übertragen.

Die Verwaltungs-Applikation 150 wird zudem direkt von der Kommunikations-Komponente 120 angesprochen und erhält von dieser Kommunikations-Komponente 120 das Ergebnis zugeschickt. Nach Validierung des Ergebnisses durch die Verwaltungs-Applikation 150 sendet diese Verwaltungs-Applikation 150 eine Rückantwort an die externe Applikation 140, welche den Authentifizierungs-Vorgang zuvor gestartet hatte.

Die Verwaltungs-Applikation 150 kann eine Bibliothek, eine eigene Applikation oder ein eigener Server sein. Es können auch mehrere Serverschnittstellen 155 vorhanden sein, die nur mit einer beschränkten Anzahl von Applikationen verwendet werden, um die Sicherheit des gesamten Systems zu erhöhen.

### Bezugszeichen

- 5: System
- 10: Lokale Einheit
- 20: Prozessor
- 23: Grafikkarte
- 26: Speicherplatz
- 30: Netzwerk-Schnittstelle
- 40: Sicherheits-Schnittstelle
- 50: Sicherheitsvorrichtung
- 110: Lokale Anwendung
- 120: Kommunikations-Komponente
- 130: Externer Rechner
- 140: Externe Applikation
- 150: Verwaltungs-Applikation
- 155: Server-Schnittstelle
- 160: Netzwerk

## Patentansprüche

1. Verfahren zum Einsatz von Kryptographie- und Authentifizierungs-Verfahren unter Einsatz eines URI-Schemas (300) umfassend:
Registrierung des URI-Schemas (300) bei Aktivieren oder Starten einer lokalen Einheit (10) oder bei der Installation der Kommunikations-Komponente (120);
Erzeugen eines URIs (410) mit dem registrierten URI-Schema;
Aufrufen (420) einer Kommunikations-Komponente (120) mittels des erzeugten URIs und des registrierten URI-Schemas;
Durchführung (430) des Kryptographie- und/oder Authentifizierungs-Verfahrens durch die Kommunikations-Komponente (120); und
Erzeugung (440) mindestens eines Ergebnisses durch die Kommunikations-Komponente (120).

2. Verfahren nach Anspruch 1, weiter umfassend:
Zugriff auf eine Sicherheitsvorrichtung (50) durch die Kommunikations-Komponente (120)

3. Verfahren nach einem der vorhergehenden Ansprüche, weiter umfassend:
Abfrage eines Identifikators durch die Kommunikations-Komponente (120) vor Durchführung des Kryptographie- und Authentifizierungs-Verfahrens (430).

4. Verfahren nach einem der vorhergehenden Ansprüche, weiter umfassend:
Erzeugung des URIs (410) auf dem externen Rechner (130) und Übermittlung des URIs von dem externen Rechner (130) an die lokale Anwendung (110) vor dem Aufrufen (420) der Kommunikations-komponente (120).

5. Verfahren nach einem der vorhergehenden Ansprüche, weiter umfassend: Weiterleitung des erzeugten Ergebnisses an die lokale Anwendung (110) bzw. an einen externen Rechner (130).

6. Verfahren nach einem der vorhergehenden Ansprüche, weiter umfassend Verarbeitung des erzeugten Ergebnisses durch die Verwaltungs-Applikation (150) auf dem externen Rechner (130).

7. Verfahren nach einem der vorhergehenden Ansprüche, wobei das Ergebnis von der Kommunikations-Komponente (120) eine Signatur über Daten ist oder verschlüsselte bzw. entschlüsselte Daten sind.

8. Lokale Einheit (100) umfassend:
einen Prozessor (20) mit einer lokalen Anwendung (110) und einer lokalen Kommunikations-Komponente (120), welche ein URI-Schema bei Aktivieren oder Starten einer lokalen Einheit (10) oder bei der Installation der Kommunikation-Komponente (120) registriert;
eine Netzwerk-Schnittstelle (30) zur Verbindung der lokalen Einheit (10) mit einem externen Rechner (130), wobei die Netzwerk-Schnittstelle (30) Befehle zum Starten einer externen Applikation (140) überträgt und Parameter von der externen Applikation (140) empfängt;
wobei die lokale Anwendung (110) dazu angepasst ist, mittels eines erzeugten URIs die Kommunikations-Komponenten (120) über das selbst registrierte URI-Schema aufzurufen; und
wobei die Kommunikations-Komponente (120) dazu angepasst ist, Kontakt mit einer Sicherheitsvorrichtung (50) herzustellen und ein Ergebnis an den externen Rechner (130) zu übermitteln.

## Claims

1. Method for implementing cryptography and authentication procedures using a URI scheme (300) comprising:
registering the URI scheme (300) when activating or starting a local unit (10) or when installing a local communication component (120);
generating a URI (410) with the registered URI scheme;
calling (420) the communication component (120) using the generated URI and the registered URI scheme;
performing (430) the cryptography and/or authentication procedure by the communication component (120); and
generation (440) of at least one result by the communication component (120).

2. Method according to claim 1, further comprising:
access to a security device (50) by the communication component (120).

3. Method according to any of the previous claims, further comprising:
querying an identifier by the communication component (120) prior to performing the cryptography and authentication procedure (430).

4. Method according to any of the previous claims, further comprising:
generation of the URI (410) on the external computer (130) and transmission of the URI from the external computer (130) to the local application (110) prior to calling (420) the communication component (120).

5. Method according to any of the previous claims, further comprising:
forwarding the generated result to the local application (110) or to an external computer (130).

6. Method according to any of the previous claims, further comprising processing of the generated result by the administration application (150) on the external computer (130).

7. Method according to one of the previous claims, wherein the result from the communication component (120) is a signature over data or encrypted or decrypted data.

8. Local unit (10) comprising:
a processor (20) having a local application (110) and a local communication component (120) registering a URI scheme when activating or starting the local unit (10) or when installing the communication component (120);
a network interface (30) for connecting the local unit (10) to an external computer (130), wherein the network interface (30) transmits commands for starting an external application (140) and receives parameters from the external application (140);
wherein the local application (110) is adapted to call the communication component (120) using a generated URI via the self-registered URI scheme; and
wherein the communication component (120) is adapted to establish a contact with a security device (50) and transmit a result to the external computer (130).

## Revendications

1. Procédé pour employer des procédures de cryptographie et d'authentification utilisant un protocole URI (300) comprenant :
enregistrer le protocole URI (300) lors de l'activation ou du démarrage d'une unité locale (10) ou lors de l'installation d'une composante de communication locale (120) ;
générer une URI (410) en utilisant le protocole URI enregistré ;
appeler (420) la composante de communication (120) au moyen de l'URI générée et du protocole URI enregistré ;
exécuter (430) la procédure de cryptographie et/ou d'authentification par la composante de communication (120) ; et
générer (440) au moins un résultat par la composante de communication (120).

2. Procédé selon la revendication 1, comprenant en outre l'accès à un dispositif de sécurité (50) par la composante de communication (120)

3. Procédé selon l'une quelconque des revendications précédentes, comprenant en outre :
l'interrogation d'un identifiant par la composante de communication (120) avant d'effectuer la procédure de cryptographie et d'authentification (430).

4. Procédé selon l'une quelconque des revendications précédentes, comprenant en outre :
la génération de l'URI (410) sur l'ordinateur externe (130) et la transmission de l'URI de l'ordinateur externe (130) à l'application locale (110) avant d'appeler (420) la composante de communication (120).

5. Procédé selon l'une quelconque des revendications précédentes, comprenant en outre :
la transmission du résultat généré à l'application locale (110) ou à un ordinateur externe (130).

6. Procédé selon l'une quelconque des revendications précédentes, comprenant en outre le traitement du résultat généré par l'application de gestion (150) sur l'ordinateur externe (130).

7. Procédé selon l'une quelconque des revendications précédentes, dans lequel le résultat de la composante de communication (120) est une signature sur des données ou des données cryptées ou décryptées.

8. Unité locale (10) comprenant :
un processeur (20) ayant une application locale (110) et une composante de communication locale (120) qui enregistre un protocole URI lors de l'activation ou du démarrage de l'unité locale (10) ou lors de l'installation de la composante de communication (120) ;
une interface réseau (30) pour connecter l'unité locale (10) à un ordinateur externe (130), dans laquelle l'interface réseau (30) transmet des commandes pour le démarrage d'une application externe (140) et reçoit des paramètres de l'application externe (140) ;
dans laquelle l'application locale (110) est adaptée pour appeler la composante de communication (120) au moyen d'une URI générée via le protocole URI auto-enregistré ; et
dans laquelle la composante de communication (120) est adaptée pour établir un contact avec un dispositif de sécurité (50) et transmettre un résultat à l'ordinateur externe (130).
